(19) Europäisches Patentamt / European Patent Office / Office européen des brevets

(11) **EP 3 864 444 B1**

(12) **FASCICULE DE BREVET EUROPEEN**

(45) Date de publication et mention de la délivrance du brevet:
**07.12.2022 Bulletin 2022/49**

(21) Numéro de dépôt: **19782621.7**

(22) Date de dépôt: **08.10.2019**

(51) Classification Internationale des Brevets (IPC):
**G02B 3/00** *(2006.01)*  **B60Q 1/50** *(2006.01)*
**B60R 13/00** *(2006.01)*  **G09F 21/04** *(2006.01)*
**F21S 43/20** *(2018.01)*

(52) Classification Coopérative des Brevets (CPC):
**G02B 3/0056; F21S 43/239; F21S 43/245; F21S 43/26; G02B 30/27; G09F 19/12; G09F 21/048;** F21W 2104/00

(86) Numéro de dépôt international:
**PCT/EP2019/077245**

(87) Numéro de publication internationale:
**WO 2020/074530 (16.04.2020 Gazette 2020/16)**

(54) **PIECE DE CARROSSERIE COMPRENANT UNE PAROI LENTICULAIRE POUR FORMER UNE IMAGE TRIDIMENSIONNELLE**

KAROSSERIETEIL MIT EINER LINSENFÖRMIGEN FOLIE ZUR ERZEUGUNG EINES DREIDIMENSIONALEN BILDES

BODYWORK PART COMPRISING A LENTICULAR SHEET FOR FORMING A THREE-DIMENSIONAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2018 FR 1859310**

(43) Date de publication de la demande:
**18.08.2021 Bulletin 2021/33**

(73) Titulaire: **Compagnie Plastic Omnium 69007 Lyon (FR)**

(72) Inventeurs:
• **KHAYAT, Issam**
  **01150 Sainte-Julie (FR)**
• **SCHOTT, Vivien**
  **01150 Saint-Julie (FR)**
• **BOISSON, Damien**
  **01150 Sainte-Julie (FR)**
• **TORRES, Olivier**
  **01150 Sainte-Julie (FR)**

(74) Mandataire: **LLR**
  **11 boulevard de Sébastopol**
  **75001 Paris (FR)**

(56) Documents cités:
WO-A1-2010/057832    WO-A1-2016/191321
US-A1- 2004 160 782   US-A1- 2006 262 411
US-A1- 2016 018 661

**Description**

L'invention concerne le domaine des véhicules automobiles et plus particulièrement les panneaux formant les éléments de carrosserie.

Il est d'usage courant d'insérer des éléments décoratifs dans les panneaux de carrosserie pour rehausser l'esthétique du véhicule. Ces éléments décoratifs peuvent servir à renforcer les lignes de la carrosserie ou encore supporter un logo ou un signe distinctif de la marque ou du modèle de véhicule.

Pour renforcer cet effet visuel les éléments décoratifs jouent sur les propriétés optiques des matériaux qui les composent et peuvent comporter des sources de lumière.

Ainsi la publication WO2016174917 décrit une feuille dont une première face supporte une pluralité de lentilles cylindriques et dont la seconde face, opposée à la première face, est une surface plane sur laquelle sont imprimées une première image et une seconde image. Les images sont disposées de manière à créer un effet stéréoscopique dans le plan de la feuille, de sorte qu'un observateur extérieur situé du côté de la première face voit apparaitre une image reconstituée en trois dimensions.

De manière similaire, le document JP2010 256807 propose une plaque sur laquelle une première face supporte une partie d'un motif principal pixélisé en creux. L'autre partie complémentaire du motif principal est formée par des structures en relief disposées sur la surface arrière de la plaque de manière à produire un motif de moiré dans le plan de la feuille pour un observateur placé du côté de la première face.

L'invention a pour objet de proposer une solution alternative originale permettant de faire apparaitre une image tridimensionnelle en relief de grande taille.

La pièce de carrosserie pour véhicule automobile selon l'invention comprend une paroi lenticulaire en matière plastique moulée transparente, d'un indice de réfraction donné supérieur à un et d'épaisseur donnée, comportant une face externe et une face interne opposée à la face externe. Cette pièce se caractérise en ce que :

- la face externe de la paroi lenticulaire forme un réseau de microlentilles sensiblement sphériques d'un rayon de courbure donné et disposées selon un pas donné et,
- la face interne de la paroi lenticulaire, supporte un réseau de motifs tridimensionnels disposés selon le pas du réseau de microlentilles caractérisé en ce que ledit réseau de motifs tridimensionnels est formé de fractions d'un motif tridimensionnel entier, de dimensions égales, deux fractions de motifs tridimensionnels adjacentes étant décalées dans la direction considérée d'un déphasage donné, et dans lequel chacune de ces fractions de motifs tridimensionnels est agrandie d'un coefficient d'agrandissement donné, et sont juxtaposées sur la face interne de la paroi lenticulaire à un pas correspondant au pas des microlentilles.

En choisissant judicieusement le rayon et le pas des microlentilles, le pas et la taille des fractions de motifs en relief et de l'agrandissement, l'épaisseur de la pièce en fonction de l'indice de réfraction du matériau transparent on peut jouer sur la hauteur de l'image tridimensionnelle par rapport à la pièce de carrosserie ainsi que sur la taille et la résolution de l'image visible par un observateur situé du côté de la face extérieure de la pièce de carrosserie. Comme on le verra par la suite, la taille de l'image tridimensionnelle peut être ajustée sans qu'il soit nécessaire d'augmenter ou de réduire le rayon de courbure des microlentilles.

La pièce de carrosserie selon l'invention peut comprendre isolément, ou en combinaison, les caractéristiques suivantes :

- Une longueur et une largeur de ladite fraction de motif sont respectivement égales aux pas du réseau de microlentilles.

- Un pas réduit correspond à la valeur du pas des microlentilles, diminué de la valeur du décalage multiplié par le coefficient d'agrandissement.

- Pièce de carrosserie selon l'une quelconque des revendications précédentes dans laquelle les motifs tridimensionnels (110) forment des reliefs sur la face interne (11) de la paroi lenticulaire (1).

- L'épaisseur de la paroi lenticulaire est comprise entre 1,5 mm et 5 mm et préférentiellement entre 1,5 mm et 3,5 mm.

- Le rayon des microlentilles est compris entre 0,5 mm et 3,5 mm.

- Le pas du réseau de microlentilles est compris entre 0,5 mm et 3 mm.

- Les microlentilles et le réseau de fractions de motifs tridimensionnels ont un pas longitudinal différent du pas transversal.

- Une hauteur de l'image tridimensionnelle par rapport à la face externe de la paroi lenticulaire est inférieure ou égale à 15 cm et préférentiellement inférieure à 10 cm.

- Une paroi écran d'indice de réfraction, inférieur à l'indice de réfraction de la paroi lenticulaire, est surmoulée sur la face interne de la paroi lenticulaire.

- La paroi lenticulaire forme une paroi extérieure d'un caisson optique fermé comprenant une paroi intérieure réfléchissant la lumière.

- La paroi lenticulaire est fabriquée dans un matériau choisi parmi : le polypropylène, le polyéthylène téréphtalate, le polymétacrilate de méthyle, le polycarbonate, le polytéréphtalate d'éthylène, l'acrylonitrile styrène acrylate, l'acrylonitrile butadiène styrène.

## Brève description des figures

L'invention sera mieux comprise à la lecture des figures annexées, qui sont fournies à titre d'exemples et ne présentent aucun caractère limitatif, dans lesquelles :

- La figure 1 illustre une vue de la face externe d'une pièce de carrosserie selon l'invention.
- La figure 2 illustre une vue de la face interne de la pièce de carrosserie.
- La figure 3 illustre une vue de la pièce de carrosserie en transparence.
- Les figures 4 et 5 illustrent des configurations différentes de disposition des microlentilles sur la face externe de la pièce de carrosserie.
- La figure 6 illustre une vue en perspective de l'image tridimensionnelle disposée entre la pièce de carrosserie et un observateur extérieur.
- La figure 7 représente une vue schématique de la pièce de carrosserie et des grandeurs associées.
- La figure 8 illustre le cheminement des rayons lumineux.
- Les figures 9 et 10 illustrent le positionnement de l'image en fonction des pas relatifs des lentilles et des motifs.
- Les figures 11 et 12 sont des représentations schématiques d'un premier mode de sélection des fractions de motifs de la pièce de carrosserie.
- Les figures 13, 14 et 15 sont des représentations schématiques d'un deuxième mode de sélection des fractions de motifs de la pièce de carrosserie.
- La figure 16 est une alternative de réalisation de disposition des fractions de motifs.
- La figure 17 est une représentation en coupe d'une première forme de réalisation de la pièce de carrosserie.
- La figure 18 est une représentation en coupe d'une deuxième forme de réalisation de la pièce de carrosserie.
- La figure 19 est une représentation en coupe d'une troisième forme de réalisation de la pièce de carrosserie.
- La figure 20 est une représentation en coupe d'une quatrième forme de réalisation de la pièce de carrosserie.
- La figure 21 illustre un détail du dispositif selon la quatrième forme de réalisation de la pièce de carrosserie montrant un dispositif d'éclairage disposé le long d'une face latérale de la paroi lenticulaire.
- La figure 22 illustre une partie avant de véhicule comprenant une calandre sur laquelle est disposée une pièce de carrosserie selon l'invention.
- Les figures 23 et 23a illustrent le mode de fabrication d'une pièce de carrosserie selon la première forme de réalisation.
- Les figures 24 et 24a illustrent le mode de fabrication d'une pièce de carrosserie selon la deuxième forme de réalisation.

## Description détaillée

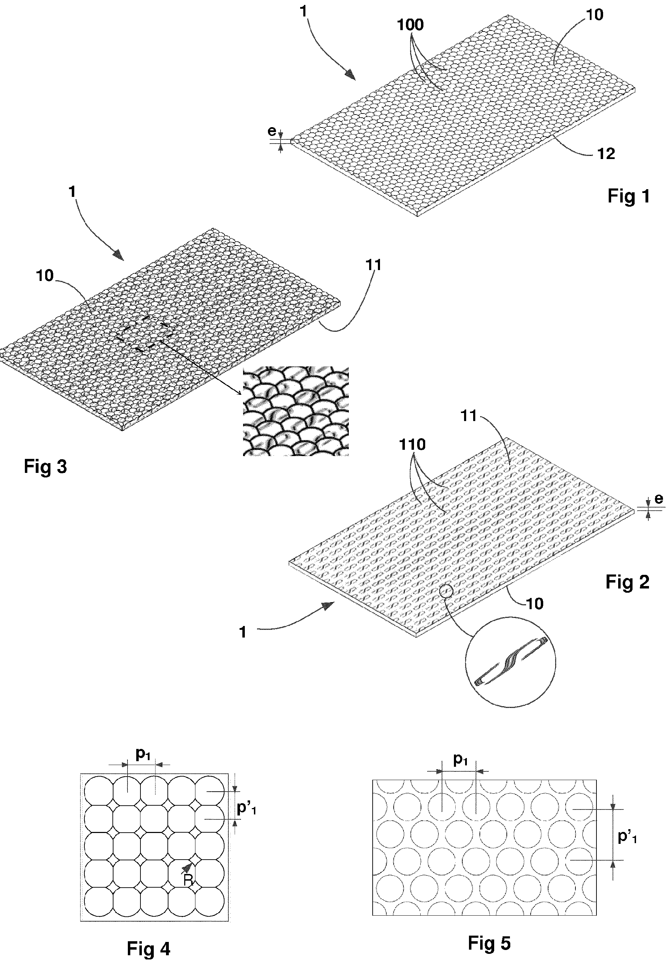

La figure 1 représente une vue schématique en perspective de la face externe 10 d'une paroi lenticulaire 1, d'épaisseur e. La face externe 10 est considérée ici comme la face extérieure de la peau du véhicule et visible par un observateur situé à l'extérieur du véhicule. La face externe 10 supporte un réseau de microlentilles 100. Les microlentilles, toutes identiques, ont une forme sphérique de rayon R. La face latérale 12 est lisse et ne comporte pas de motifs.

La figure 2 illustre la même paroi lenticulaire 1 vue du côté de la face intérieure 11. Des motifs en relief 110, tous identiques, sont disposés de manière régulière. Ces motifs tridimensionnels peuvent indifféremment être réalisés en creux ou en relief. Dans l'exemple servant de support à la présente description ces motifs ont la forme d'un S stylisé tel qu'illustré dans le médaillon accroché à la figure 2.

La paroi lenticulaire est réalisée en matière plastique transparente d'indice de réfraction n. A titre d'exemple, des matériaux présentant une bonne transparence et pouvant convenir à cet usage sont : le polypropylène, le polyéthylène téréphtalate, le polymétacrilate de méthyle, le polycarbonate, le polytéréphtalate d'éthylène, l'acrylonitrile styrène acrylate, l'acrylonitrile butadiène styrène. Chacun de ces matériaux possède bien évidemment un indice de réfraction connu qui lui est propre.

La figure 3 et le médaillon qui lui est attaché permettent d'illustrer la paroi lenticulaire en transparence, en faisant apparaitre simultanément le réseau de microlentilles 100 et le réseau de motifs tridimensionnels 110.

On repèrera par $p_1$ le pas séparant deux microlentilles 100 juxtaposées dans la direction longitudinale et par $p'_1$, le pas séparant deux microlentilles 100 juxtaposées dans la direction transversale. En règle générale ces deux pas sont égaux ($p_1=p'_1$).

La figure 4 illustre le cas dans lequel le pas $p_1$ est égal au pas $p'_1$ . Le rayon R des microlentilles est, dans le cas de cet exemple, supérieur au pas $p_1$.

La figure 5 illustre le cas dans lequel le pas $p_1$ est inférieur au pas $p'_1$ et dans lequel le rayon R des microlentilles est inférieur au pas $p_1$.

Ces modes de réalisation du réseau de microlentilles ne sont pas limitatifs et toutes les combinaisons des modes de réalisation illustrés sont également admises.

La taille (le rayon R) et la densité des microlentilles (le pas) permettent de faire varier la résolution de l'image tridimensionnelle.

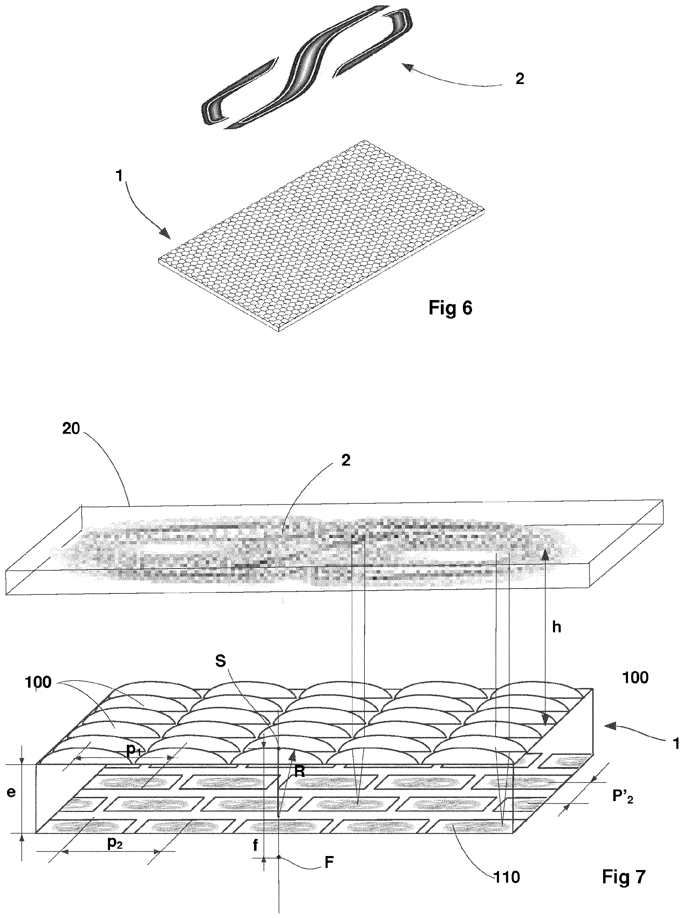

La figure 6 illustre la formation de l'image tridimensionnelle obtenue en éclairant la plaque lenticulaire à l'aide d'une lumière naturelle et visible par un observateur externe. Dans le cas de cette exemple, l'image tridimensionnelle est formée entre la paroi lenticulaire et l'œil de l'observateur. On parlera alors d'une image réelle.

La figure 7 permet de visualiser les principales grandeurs géométriques permettant de configurer le dispositif.

La valeur N représente le nombre de motifs disposés sur la face interne selon une direction donnée (longitudinale ou transversale).

Le pas $p_1$ et le pas $p_2$ représentent respectivement le pas des microlentilles et des motifs selon une même direction (longitudinale). La valeur $\Delta p = p_2 - p_1$ exprime la valeur de la différence entre le pas $p_2$ et le pas $p_1$ et peut être de signe positif ou négatif. La valeur absolue de cette différence s'exprime sous la forme $|\Delta p|$. Le rapport $\frac{\Delta p}{|\Delta p|}$ exprime le signe de cette différence. La valeur e représente l'épaisseur de la paroi lenticulaire.

La valeur $\Gamma$ représente la taille d'une image dans une direction donnée et correspond à la distance entre les deux points les plus distants de l'image dans cette direction. On peut donc avoir une valeur $\Gamma$ selon la direction longitudinale et une valeur $\Gamma'$ dans la direction transversale. La valeur de $\Gamma$ est également sensiblement égale à la taille de la paroi lenticulaire permettant d'imager un motif tridimensionnel entier dans cette direction.

R représente le rayon de courbure, C le centre de courbure, S le sommet du dioptre et F le point focal d'une microlentille placé à une distance f du centre de courbure S. L'ensemble des points focaux F de l'ensemble des lentilles est disposé sur le plan focal.

Les points A et A' déterminent respectivement la position d'un point objet d'un motif 3D disposé sur la face interne et la position de ce point dans l'image tridimensionnelle formée à travers le système.

La hauteur de l'image par rapport à la surface de la paroi lenticulaire est définie par la valeur h. On notera ici que l'image tridimensionnelle est également une image en trois dimensions qui s'inscrit dans une boite enveloppante 20.

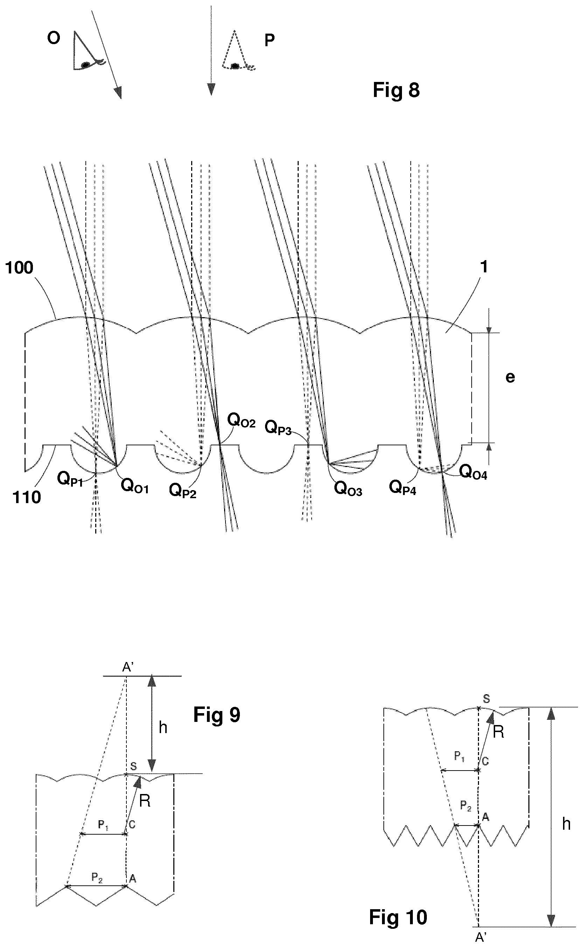

La figure 8 illustre les différents parcours lumineux observables par deux observateurs O et P regardant la paroi lenticulaire selon des angles d'observation différents.

On observera que, selon leur angle d'incidence par rapport au point d'un motif sur lequel ils se projettent, une partie des rayons traversent la paroi lenticulaire, et seule une partie des rayons est réfléchie. Un premier observateur O, imagé en traits pleins, va pouvoir observer les rayons se réfléchissant sur les motifs de la face inférieure aux points $Q_{O1}$, et $Q_{O3}$. Et un observateur P verra lui les rayons venant des points $Q_{P2}$ et $Q_{P4}$. les rayons passant par les points $Q_{P1}$, $Q_{O2}$, $Q_{P3}$, $Q_{O4}$, traversent la paroi lenticulaire et ne sont visibles par aucun des observateurs O ou P.

Cette catégorie de rayon subissant une réflexion totale, en fonction de leur angle d'incidence sur la paroi du motif tridimensionnel, forme l'image tridimensionnelle sous forme de pixels distribués dans l'espace image et visible par l'observateur.

Le décalage entre le motif et une lentille permet de sélectionner des points différents du motif.

La différence entre le pas $p_1$ et le pas $p_2$, permet de faire varier le positionnement dans l'espace de l'image tridimensionnelle. Lorsque le pas $p_2$ des motifs est supérieur au pas $p_1$ des microlentilles ($\Delta p > 0$), comme cela est illustré à la figure 9, l'image réelle (ou en relief) se forme au-dessus de la face externe 10, entre l'observateur et la face externe. En revanche, lorsque le pas $p_2$ est inférieur au pas $p_1$ ($\Delta p < 0$), comme cela est illustré à la figure 10, une image virtuelle (en profondeur) se forme en dessous de la face interne 11 de la paroi lenticulaire.

Il est également possible de faire varier la position du plan contenant les points focaux des microlentilles pour obtenir une image virtuelle en profondeur ou une image réelle. Lorsque ce plan focal est situé dans l'épaisseur de la paroi lenticulaire les positions de l'image réelle et de l'image virtuelle sont inversées par rapport à ce qui est énoncé au paragraphe précédent.

A titre d'exemple, pour une paroi lenticulaire de 3 mm d'épaisseur et dont la taille est de 3 cmx3 cm sur la face intérieure de laquelle les motifs en relief sont distants d'un pas $p_2$ de 1,25 mm, le rayon des microlentilles est de 1,06 mm pour une image tridimensionnelle réelle (en relief) située à 4,42 cm de la face extérieure 10 de la paroi lenticulaire 1. Lorsque le rayon des microlentilles est de 1,15 mm l'image tridimensionnelle virtuelle (en profondeur) se forme à une hauteur de -4,42 cm de la face extérieure 10. Cette différence est due à la position du plan focal qui se situe dans un cas à -2,88 mm de la face extérieure (à l'intérieur de la paroi lenticulaire) et à -3,12 mm de la face extérieure (à l'extérieur de la paroi lenticulaire) dans l'autre cas.

Toutefois lorsque l'on cherche à obtenir des images plus grandes, cette disposition conduit à réaliser des microlentilles présentant un rayon de courbure R très important, plus difficile à obtenir en fabrication courante.

En faisant appel aux lois de l'optique, il est possible de définir les relations entre les différents paramètres exposés ci-dessus.

Ainsi, on peut faire varier la taille de l'image en changeant la différence de période entre les microlentilles et les motifs en relief de la face intérieure.

Dans la direction longitudinale, la relation entre le pas $p_1$ des microlentilles et le pas $p_2$ des motifs en relief se présente sous la forme suivante :

$$\frac{1}{p_2} + \frac{\Delta p}{|\Delta p|}\frac{1}{\Gamma} = \frac{1}{p_1} \qquad (1)$$

La même relation (1) s'applique entre les valeurs $p'_1$ et $p'_2$ représentant les pas des microlentilles et des motifs tridimensionnels selon la direction transversale :

$$\frac{1}{p'_2} + \frac{\Delta p\prime}{|\Delta p\prime|}\frac{1}{\Gamma} = \frac{1}{p'_1} \qquad (1)'$$

La relation entre la taille $\Gamma$ de l'image et le rayon des microlentilles s'exprime sous la forme :

$$R = \frac{n-1}{n}\frac{e}{\left(\frac{\Delta p}{|\Delta p|}\frac{p_2}{\Gamma}+1\right)} \qquad (2)$$

Cette relation (2) permet de déterminer le rayon de courbure R des microlentilles en fonction de la taille $\Gamma$ de l'image désirée, du pas $p_2$, et de l'indice de réfraction n du matériau choisi pour réaliser la paroi lenticulaire 1. Ce rayon de courbure R est déterminé de telle sorte que les points formant l'image tridimensionnelle soient situés à l'intersection deux à deux entre duos motif/microlentille.

Compte tenu de ce qui a été dit précédemment, le rayon de courbure R des microlentilles ne peut pas être trop faible ni trop grand. En effet, si le rayon de courbure est trop grand on obtient une paroi lenticulaire comportant une face extérieure ayant un profil proche d'un plan, et si le rayon de courbure est trop petit, on obtient une face extérieure comportant des lentilles de petite taille et très espacées entre elles. Il convient donc de choisir une solution équilibrée dans laquelle le rayon de courbure des microlentilles est sensiblement égal voire légèrement supérieur à la valeur du pas. De même, pour des raisons de faisabilité on se limite à des rayons d'une taille supérieure à 0,5mm.

En pratique, pour des parois lenticulaires adaptées pour être montées sur un véhicule automobile, la valeur du rayon de courbure R des microlentilles varie de 0,5 mm à 3,5 mm, et le pas $p_1$ des microlentilles varie entre 0,5 mm et 3 mm.

Si l'on souhaite déterminer l'épaisseur e de la paroi lenticulaire en fonction du pas des motifs tridimensionnels $p_2$ de l'indice de réfraction n et du rayon R des microlentilles, on obtient une relation du type :

$$e = \frac{n}{n-1}R\left(1 + \frac{\Delta p}{|\Delta p|}\frac{p_2}{\Gamma}\right) \qquad (3)$$

A pas constant, l'épaisseur e de la plaque est sensiblement proportionnelle au rayon de courbure R. Ce qui revient à dire que, lorsqu'on augmente l'épaisseur e, on augmente également la taille des microlentilles pour obtenir une image tridimensionnelle de qualité. En pratique l'épaisseur e de la paroi lenticulaire est comprise entre 1,5mm et 5mm et préférentiellement entre 1,5mm et 3,5mm.

La hauteur h s'exprime en fonction de l'indice de réfraction n de l'épaisseur e de la paroi lenticulaire 1, de la taille souhaitée du motif tridimensionnelle $\Gamma$ et du pas $p_2$ des microlentilles de la façon suivante :

$$h = \frac{\Delta p}{|\Delta p|}\frac{\Gamma}{p_2}e\left(1 - \frac{n-1}{n}\frac{1}{\frac{\Delta p}{|\Delta p|}\frac{p_2}{\Gamma}+1}\right) \qquad (4)$$

ou encore, en se fondant sur les figures 9 ou 10, lorsque l'on souhaite exprimer la hauteur h de l'image tridimensionnelle en fonction des pas $p_1$ et $p_2$ de l'épaisseur de la paroi lenticulaire et du rayon R la relation est du type :

$$h = -\left(\frac{e-R}{p_2}\right)\left(\frac{1}{p_2} - \frac{1}{p_1}\right)^{-1} \qquad (5)$$

La hauteur h du plan de l'image tridimensionnelle est alors sensiblement inversement proportionnelle au pas. On remarque toutefois que plus la hauteur h de l'image tridimensionnelle augmente, plus la taille $\Gamma$ du motif tridimensionnel augmente, et plus la qualité de l'image se dégrade en raison d'une grande pixellisation des points formant cette dernière. On se limitera donc à une image tridimensionnelle dont la taille $\Gamma$ est sensiblement égale à la dimension de la paroi lenticulaire.

A titre d'exemple, pour obtenir une image tridimensionnelle de grande dimension pour une paroi lenticulaire en méthacrylate d'indice n égal à 1,586, et pour une paroi mesurant 30cmX30cm sur laquelle les microlentilles de la face extérieure ont un rayonde 0,8mm et sont disposées à un pas $p_1$ de 0,5 mm, égal au pas $p_2$, l'épaisseur e est égale à -2,16 mm et l'image tridimensionnelle est disposée à une hauteur de 81cm de la face extérieure 10 de la paroi lenticulaire 1.

Aussi, de préférence on s'arrangera pour déterminer les paramètres de la paroi lenticulaire de sorte que la hauteur de l'image par rapport à la face extérieure 10 de la paroi lenticulaire 1 ne soit pas trop importante, et ne dépasse pas 15cm et soit de préférence inférieure à 10 cm.

Pour obtenir ces valeurs de h faible, on observe alors que le rayon R des lentilles a tendance à diminuer en-deçà des limites de faisabilité.

Une façon de contourner cette difficulté consiste à disposer sur la face interne 11 la seule partie du motif utile sous chacune des microlentilles de manière à agrandir le motif tout en conservant les propriétés optiques que l'on aurait à un pas défini et pour une épaisseur e donnée. De cette manière il est possible d'agrandir le motif tout en gardantles propriétés optiques que l'on aurait à un pas défini et à une épaisseur définie.

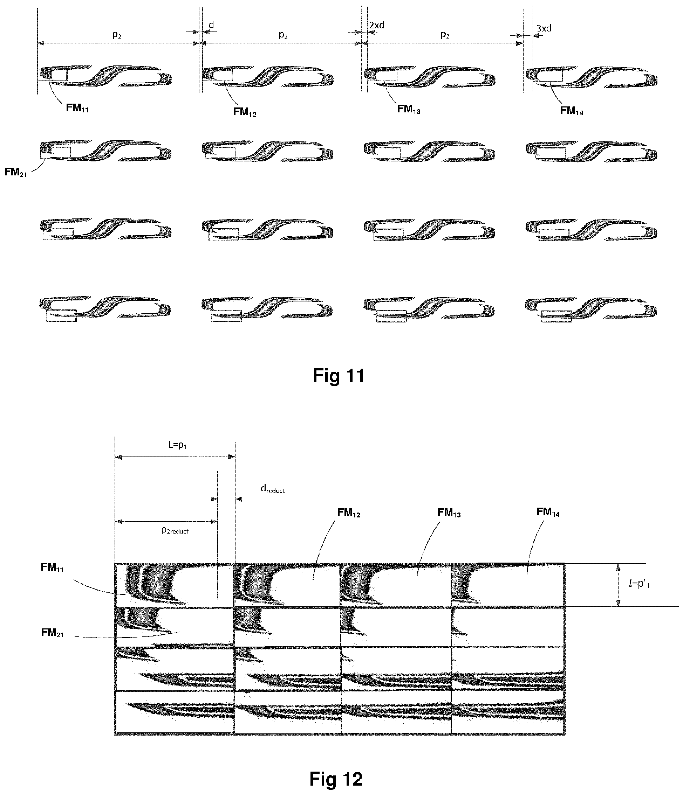

Pour ce faire, en s'appuyant sur la figure 11, on considère, dans une direction donnée (longitudinale ou transversale), un réseau de N motifs entiers de pas $p_2$ et on sélectionne une fraction de motif $FM_{11}$ d'un motif donné. On sélectionne alors une fraction de motif $FM_{12}$ de taille égale dans le motif adjacent au précédent motif en décalant la fraction de motif sélectionnée d'une valeur $p_2+d$, où d représente un déphasage donné. On obtient ainsi N fractions de motifs ($FM_{11}$, $FM_{12}$, $FM_{13}$, $FM_{14}$) représentant des images déphasées les unes par rapport aux autres d'une valeur d. Ces fractions de motifs se recouvrent alors partiellement.

On procède de la même manière les motifs $FM_{11}$, $FM_{21}$.disposés au pas $p'_2$ dans le sens transversal.

On agrandit chacune de ces fractions de motifs d'un coefficient d'agrandissement K, de sorte que, en juxtaposant les fractions de motifs ils soient disposés selon le pas $p_1$ correspondant au pas des microlentilles 100 comme, cela est illustré à la figure 12.

La longueur Ldu motif agrandi est alors égale à $p_1$, et la largeur I du motif agrandi est alors égale à $p'_1$. Chaque motif agrandi est donc disposé au droit d'une microlentille.

Le coefficient d'agrandissement K dépend alors donc directement du pas $p_1$ et de la taille des fractions de motifs choisie.

On reconstruit alors un réseau de fraction de motifs sur la face interne 11 de la paroi lenticulaire en juxtaposant les fractions de motifs agrandis selon un pas $p_1$ correspondant au pas des microlentilles 100 comme cela est illustré à la figure 12.

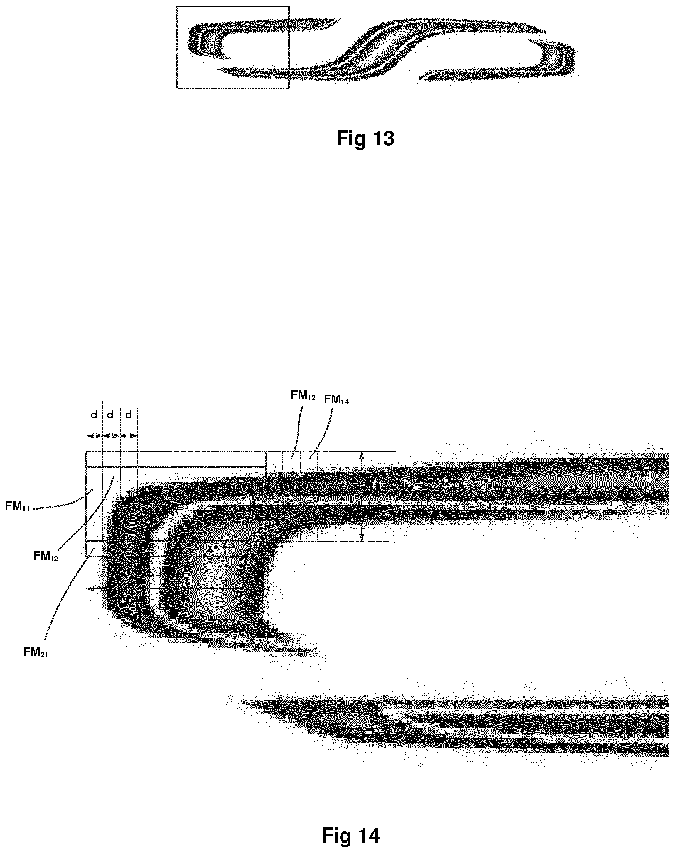

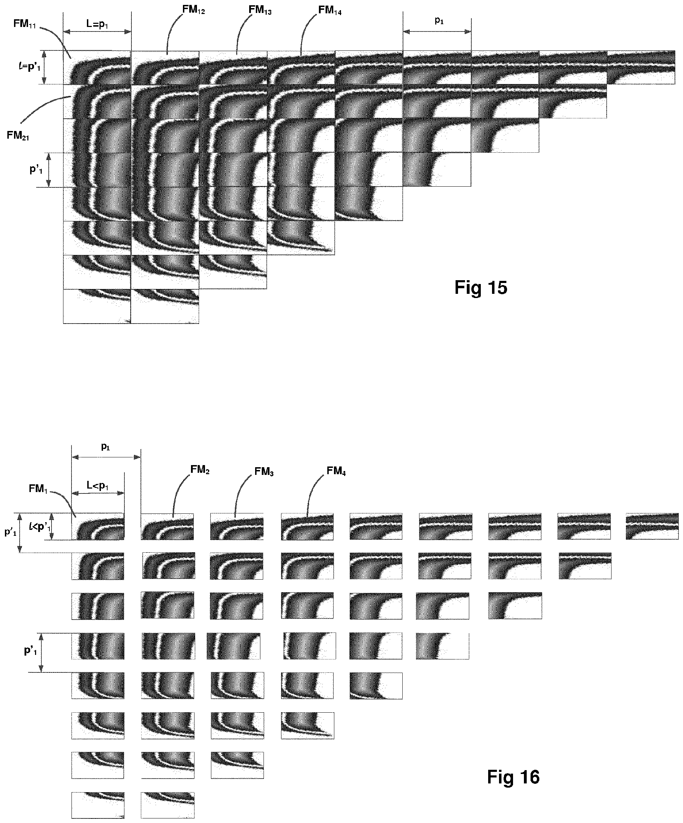

De manière équivalente, on peut tout aussi bien prendre une image agrandie du motif tridimensionnel comme illustrée à la figure 13 et prélever des fractions de motifs $FM_{11}$, $FM_{12}$, $FM_{13}$, $FM_{14}$, $FM_{21}$, dont la longueur L et la largeur I correspondent aux pas $p_1$ et $p'_1$ du réseau de microlentilles comme cela est illustré à la figure 14. Les fractions de motif sont alors juxtaposées comme cela est illustré à la figure 15.

Il est également tout à fait possible de disposer sur la face interne 11 des fractions de motifs dont la longueur L et la largeur I sont inférieures ou supérieures aux pas $p_1$ et $p'_1$ du réseau de microlentilles. Il importe alors de disposer ces fractions d'image selon les pas $p_1$ et $p'_1$. Les fractions d'image peuvent alors être disjointes, comme cela est représenté à la figure 16, ou se superposer partiellement (non représenté).

On en déduit alors un pas réduit $p_{2reduct}$, assimilable à un pas de motifs fictif, correspondant à la valeur du pas

$p_1$ diminué de la valeur du décalage multiplié par le coefficient d'agrandissement K ($p_{2reduct}$ = $p_1$ - Kd).

Ce pas réduit s'exprime également sous la forme :

$$(N-1)p_{2_{reduct}} = Np_2 + \frac{\Delta p}{|\Delta p|}Qp_2 - \left(\frac{\Delta p}{|\Delta p|} + 1\right)p_2$$

La valeur de $d_{réduct}$ se calcule alors aisément : $d_{reduct}$ = $p_1$ - $p_{2reduct}$.

Lorsque la valeur de $d_{reduct}$ est positive on obtient une image tridimensionnelle en profondeur et lorsque la valeur de $d_{reduct}$ est négative on obtient une imagetridimensionnelle en relief.

L'intérêt de cette méthode est que les formules (1), (2), (3) et (4) s'appliquent de manière identique en remplaçant la valeur de $p_2$ par $p_{2reduct}$.

La valeur de la hauteur h se calcule alors de manière simple à l'aide de la relation

$$h = -(\frac{e-R}{p_2})(\frac{1}{p_2} - \frac{1}{p_1})^{-1} \qquad (5)$$

Ainsi, à rayon R de microlentilles équivalent, la hauteur h est réduite en proportion du coefficient K. A la différence de la méthode précédente dans laquelle le réseau de motifs est constitué d'une répétition de motifs entiers tous identiques disposés à un pas $p_2$ différent du pas $p_1$, c'est la valeur du déphasage d entre deux motifs successifs permet de former l'image tridimensionnelle en relief ou en profondeur. Si l'angle d'observation augmente il se produit un saut d'image et l'image tridimensionnelle se décale brusquement.

En revanche, ce type d'arrangement réduit la profondeur et l'effet de relief de l'image tridimensionnelle.

Bien évidemment, ces dispositions s'appliquent comme précédemment, indistinctement dans la direction longitudinale ou dans la direction transversale.

A la différence de la méthode décrite précédemment dans laquelle on reproduit un motif identique sur une grande échelle il y a un saut entre deux images. Si l'angle d'observation augmente au point que la lentille se mette à imager le motif adjacent, il se produit un saut de l'image, l'image tridimensionnelle se décale brusquement. Cet effet est peu sensible pour un coefficient K grand (supérieur à 2). Cela est également le cas si chacune des images décalées arrivent dans chacun des deux yeux.

On observera ici que chaque fraction de motif est un motif unique et qu'il est donc nécessaire de les créer un à un sur la partie du moule destinée à former la face inférieure 11. Aussi on fera appel à des dispositifs de gravure pilotés par ordinateur pour s'assurer de la bonne régularité de la position et de la forme des motifs.

La portion de motif située au centre de l'image tridimensionnelle doit être parfaitement alignée avec la microlentille lui correspondant, pour que l'image tridimensionnelle soit correctement centrée.

En choisissant une construction du réseau formé de fractions de motifs, on peut alors obtenir des valeurs de h se situant entre 2 cm et 15 cm pour une image réelle en relief, ou entre -2 cm et -15 cm pour une image virtuelle en profondeur.

La modification de la taille de l'image tridimensionnelle peut se faire en ajustant judicieusement la taille de l'image agrandie.

Et il est possible de passer d'une image réelle à une image virtuelle en changeant simplement l'épaisseur e de la paroi lenticulaire 1, ce qui est relativementfacile à réaliser, tout en conservant un réseau lenticulaire 100 inchangé.

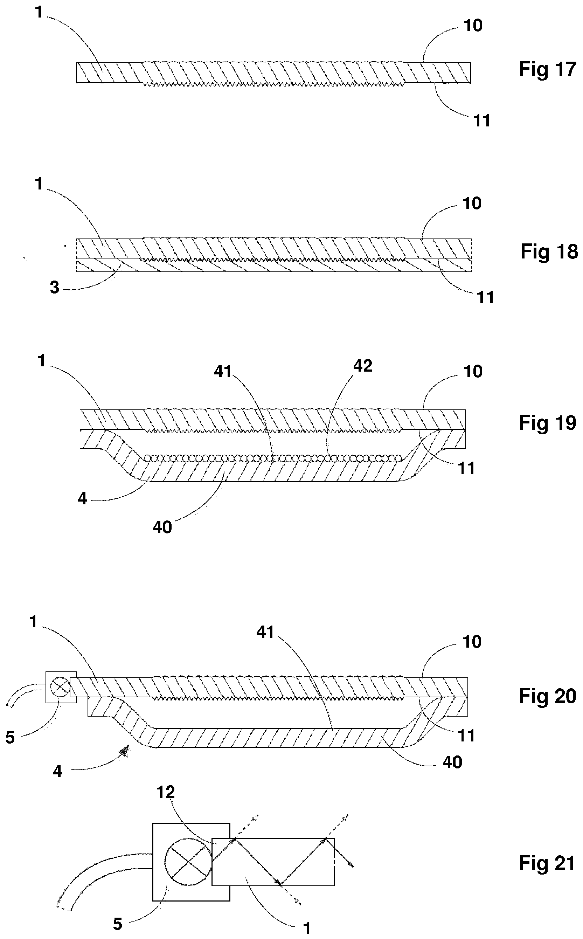

Les figures 17 à 20 illustrent des modes particuliers de mise en œuvre de l'invention.

La figure 17 illustre une première forme de réalisation de l'invention dans lequel la paroi lenticulaire est installée sur le véhicule sans montage additionnel. Cette paroi lenticulaire présente toutefois l'inconvénient que les rayons qui traversent la paroi (voir figure 8) peuvent être réfléchis par des objets se situant à l'arrière de la paroi lenticulaire, permettant à l'observateur de visualiser des parties internes du véhicule.

La deuxième forme de réalisation illustrée à la figure 18 a pour objet de supprimer cet inconvénient.

A cet effet, une paroi écran 3 d'indice de réfraction n', inférieur à l'indice de réfraction n de la paroi lenticulaire (n'<n), est surmoulée sur la face interne 11 de la paroi lenticulaire 1. Les motifs en relief disposés sur la face interne 11 de la face inférieure apparaissent en creux dans la face de la paroi écran en contact avec la face interne 11 de la paroi lenticulaire. Ces deux premiers modes de mise en œuvre de l'invention sont adaptés pour faire apparaitre une image tridimensionnelle sous l'éclairage d'une lumière extérieure telle que la lumière du jour.

Les modes suivants de mise en œuvre de l'invention ont pour objet de produire une image tridimensionnelle dans des conditions de faible luminosité, par exemple en conditions de roulage nocturne.

Un troisième mode de mise en œuvre de l'invention, illustré à la figure 19, prévoit de disposer la paroi lenticulaire 1 sur un boitier optique 4 comprenant une paroi 40 formée d'un matériau ne laissant pas passer la lumière.

La face intérieure 41 de la paroi 40, opposée à la face interne 11 de la paroi lenticulaire 1 peut comporter un revêtement renvoyant la lumière ou encore une nappe émettrice de lumière 42 recouvrant la surface située au droit de la face interne 11 de la paroi lenticulaire 1 supportant le réseau de motifs tridimensionnels 110.

Cette nappe de lumière peut être constituée de fibres optiques ou encore d'un guide d'optique de lumière diffusant raccordé à une source de lumière.

Par guide optique ou guide de lumière, on entend ici une pièce transparente ou translucide, à l'intérieur de laquelle des rayons lumineux se déplacent suivant une direction générale commune depuis une première extrémité du guide comportant une surface d'entrée à proximité de laquelle sont disposées une ou plusieurs sources de lumière, jusqu'à une surface de sortie d'où les rayons lumineux émergent. La propagation de la lumière à l'intérieur du guide de lumière se fait par réflexions internes successives des rayons lumineux sur les faces de réflexion internes du guide de lumière.

On entend par guide de lumière diffusant, un guide de lumière dans lequel la surface de sortie de la lumière est formée par une face latérale dudit guide de lumière. Pour un guide de lumière diffusant de section droite circulaire, tel qu'une fibre optique, la lumière émerge du guide de lumière selon une direction sensiblement radiale. Un guide de lumière diffusant permet donc de distribuer un flux lumineux sensiblement constant en tout point de la surface de sortie de la partie diffusante du guide.

La surface de la fibre ou du guide de lumière considérée comme la surface de sortie, est traitée de manière à la rendre rugueuse. Les rugosités sont alors autant de surfaces réfléchissantes permettant à une partie de la lumière de s'échapper du guide de lumière vers l'extérieur.

Il est donc envisageable de traiter la surface intérieure 41 du boitier 4 de manière à obtenir un caisson optique faisant office de guide de lumière diffusant.

La quatrième forme de mise en œuvre de l'invention, illustrée à la figure 20, prévoit que la paroi lenticulaire fasse elle-même office de guide de lumière diffusant en mettant à profit les rugosités présentes sur la face interne 11 de la paroi lenticulaire, la lumière est alors renvoyée par la face intérieure 41 de la paroi 40 du caisson optique.

La source de lumière 5 est disposée le long d'une face latérale 12 de la paroi lenticulaire 1. Elle peut être formée à titre d'exemple, d'une pluralité de diodes électroluminescentes ou encore d'un guide de lumière diffusant du type de celui exposé ci-dessus et relié à une source lumineuse excentrée. La figure 21 illustre la circulation des rayons lumineux dans la paroi lenticulaire 1.

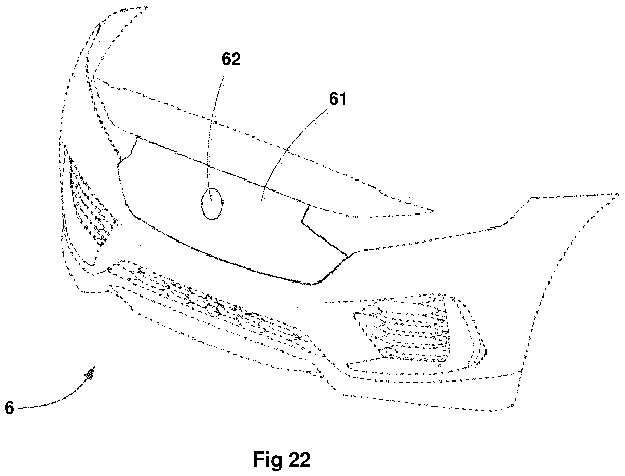

La figure 22 illustre, à titre d'exemple, un emploi avantageux d'une pièce de carrosserie du type de l'invention.

La partie avant 6 du véhicule supporte une calandre 61 au centre de laquelle est installée une pièce de carrosserie 62 comportant une paroi lenticulaire 1 conforme à l'invention. L'image tridimensionnelle représente par exemple le logo de la marque qui apparait en relief (ou en profondeur) par rapport à la surface de la calandre.

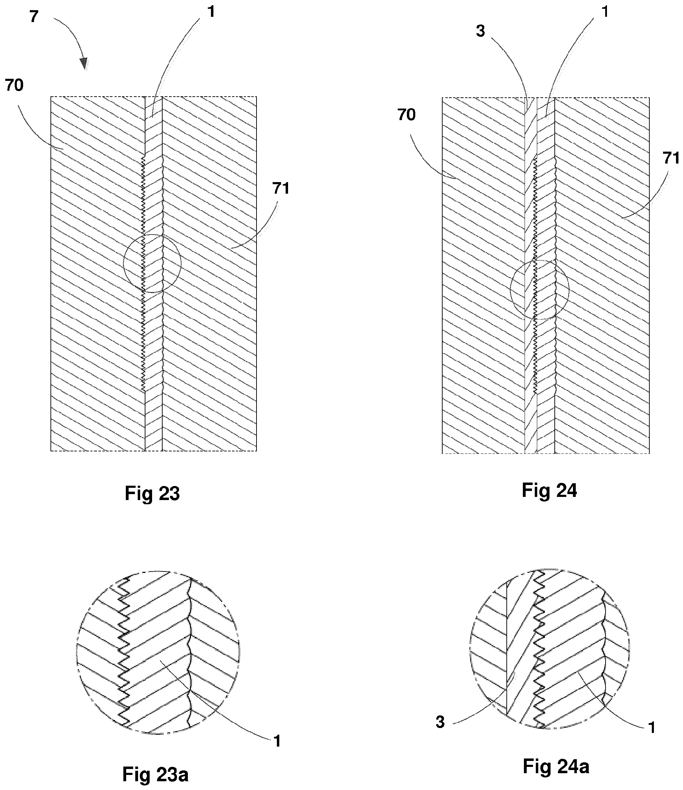

La fabrication d'une paroi lenticulaire selon l'invention est illustré aux figures 23 et 23a. On utilisera de préférence un moule à injection 7 comprenant une partie mobile 71 portant les empreintes du réseau de microlentilles et une partie fixe 70 sur laquelle sont gravés les motifs tridimensionnels. L'utilisation d'un laser à graver piloté par un ordinateur permet d'obtenir des résultats satisfaisants en particulier lorsque l'on cherche à obtenir des motifs de petite taille tous différents les uns des autres.

Le réseau de motifs tridimensionnels 110 apparait donc en relief sur la face interne 11 de la paroi lenticulaire 1.

Pour obtenir une pièce de carrosserie comportant une paroi écran 3 telle qu'illustrée à la figure 18, il est nécessaire de procéder en deux étapes successives. Au cours d'une première étape on moule la paroi lenticulaire 1. Puis, au cours d'une seconde étape, on introduit la pièce obtenue au cours de la première étape à l'intérieur d'un deuxième moule et on injecte le matériau formant la paroi écran 3 comme cela est illustré aux figures 24 et 24a.

La réalisation du caisson optique 4 se fait par des méthodes également connues de l'homme du métier. L'assemblage de la paroi lenticulaire 1 sur le caisson optique 4 peut se faire par collage, par soudure ou par tout moyen de fixation permettant de rendre solidaire la paroi lenticulaire et le caisson optique 4.

## NOMENCLATURE

| | |
|---|---|
| 1 | Paroi lenticulaire. |
| 10 | Face externe de la paroi lenticulaire. |
| 100 | Microlentilles. |
| 11 | Face interne de la paroi lenticulaire. |
| 12 | Face latérale de la paroi lenticulaire. |
| 110 | Motifs tridimensionnels. |
| 2 | Image tridimensionnelle. |
| 20 | Boite enveloppante de l'image tridimensionnelle virtuelle. |

EP 3 864 444 B1

| 3 | Paroi écran surmoulée sur la face interne de la paroi lenticulaire. |
| 4 | Caisson optique. |
| 40 | Paroi du caisson optique. |
| 41 | Face intérieure de la paroi inférieure. |
| 42 | Nappe émettrice de lumière. |
| 5 | Emetteur de lumière/Diode électroluminescente. |
| 6 | Face avant de véhicule. |
| 61 | Calandre. |
| 62 | Pièce de carrosserie. |
| 7 | Moule d'injection. |
| 70 | Partie fixe. |
| 71 | Partie mobile |
| 40 | Nappe émettrice de lumière. |
| e | Epaisseur de la paroi lenticulaire. |
| $p_1$, $p'_1$ | Pas des microlentilles sur la face externe. |
| $p_2$, $p'_2$ | Pas des motifs sur la face interne. |
| $p_{2Reduct}$ | Pas réduit des motifs de la face interne. |
| $FM_{11}$, $FM_{12}$, $FM_{13}$, $FM_{14}$, $FM_{21}$ | Fractions de motif. |
| d | Déphasage des portions de motifs. |
| K | Coefficient d'agrandissement. |
| N | Nombre de motifs selon une direction (longitudinale ou transversale). |
| n | Indice de réfraction de la paroi en plastique lenticulaire. |
| n' | Indice de réfraction de la paroi de protection. |
| R | Rayon des microlentilles. |
| C | Centre de courbure d'une microlentille. |
| S | Sommet du dioptre d'une microlentille. |
| A | Position de l'objet. |
| A' | Position de l'image. |
| $\Gamma$ | Taille d'un motif tridimensionnel. |
| h | Hauteur entre la face extérieure et le plan de formation de l'image tridimensionnelle. |
| | O, P Observateurs. |
| Q | Points de rencontre des faisceau lumineux avec les motifs de la face interne. |

## Revendications

1. Pièce de carrosserie pour véhicule automobile comprenant une paroi lenticulaire (1) en matière plastique moulée transparente, d'un indice de réfraction (n) donné supérieur à 1 et d'épaisseur (e) donnée, comportant une face externe et une face interne opposée à la face externe dans lequel :

   - la face externe (10) de la paroi lenticulaire (1) forme un réseau de microlentilles (100) sensiblement sphériques d'un rayon de courbure (R) donné, disposées selon un pas donné ($p_1$, $p'_1$) et,
   - la face interne (11) de la paroi lenticulaire (1), supporte un réseau de motifs tridimensionnels (110) disposés selon le pas du réseau de microlentilles (100) **caractérisé en ce que** ledit réseau de motifs tridimensionnels est formé de fractions d'un motif tridimensionnel entier ($FM_{11}$, $FM_{12}$, $FM_{13}$, $FM_{14}$, $FM_{21}$), de dimensions égales, deux fractions de motifs tridimensionnels adjacentes étant décalées dans la direction considérée d'un déphasage (d, d') donné, et dans lequel chacune de ces fractions de motifs tridimensionnels ($FM_{11}$, $FM_{12}$, $FM_{13}$, $FM_{14}$, $FM_{21}$) est agrandie d'un coefficient d'agrandissement donné (K)), et sont juxtaposées sur la face interne (11) de la paroi lenticulaire (1) à un pas correspondant au pas ($p_1$, $p'_1$) des microlentilles (100).

2. Pièce de carrosserie selon la revendication 1, dans laquelle une longueur (L) et une largeur (l) de ladite fraction de motif ($FM_{11}$, $FM_{12}$, $FM_{13}$, $FM_{14}$, $FM_{21}$) sont respectivement égales aux pas $p_1$ et $p'_1$ du réseau de microlentilles (100).

3. Pièce de carrosserie selon la revendication 1 ou la revendication 2, dans laquelle un pas réduit ($p_{2reduct}$) correspond à la valeur du pas des microlentilles ($p_1$) diminué de la valeur du décalage (d) multiplié par le coefficient (K) d'agrandissement ($p_{2reduct}=p_1-Kd$).

4. Pièce de carrosserie selon l'une quelconque des revendications précédentes, dans laquelle les motifs tridimensionnels (110) forment des reliefs sur la face interne (11) de la paroi lenticulaire (1).

5. Pièce de carrosserie selon l'une quelconque des revendications précédentes, dans laquelle l'épaisseur (e) de la paroi lenticulaire (1) est comprise entre 1,5 mm et 5 mm et préférentiellement entre 1,5 mm et 3,5 mm.

6. Pièce de carrosserie selon l'une quelconque des revendications précédentes, dans laquelle le rayon (R) des microlentilles (100) est compris entre 0,5 mm et 3,5 mm.

7. Pièce de carrosserie selon l'une quelconque des revendications précédentes, dans laquelle le pas ($p_1$, $p'_1$) du réseau de microlentilles (100) est compris entre 0,5 mm et 3 mm.

8. Pièce de carrosserie selon l'une quelconque des revendications précédentes, dans laquelle les microlentilles et le réseau de fractions de motifs tridimensionnels ont un pas longitudinal ($p_1$) différent du pas transversal ($p'_1$)

9. Pièce de carrosserie selon l'une quelconque des revendications précédentes, dans laquelle une hauteur (h) de l'image tridimensionnelle par rapport à la face externe (10) de la paroi lenticulaire (1) est inférieure ou égale à 15 cm et préférentiellement inférieure à 10 cm.

10. Pièce de carrosserie selon l'une quelconque des revendications précédentes, dans laquelle une paroi écran (3) d'indice de réfraction (n'), inférieur à l'indice de réfraction (n) de la paroi lenticulaire (n'<n), est surmoulée sur la face interne (11) de la paroi lenticulaire (1).

11. Pièce de carrosserie selon l'une quelconque des revendications précédentes, dans laquelle la paroi lenticulaire (1) forme une paroi extérieure d'un caisson optique (4) fermé comprenant une paroi intérieure (40) réfléchissant la lumière

12. Pièce de carrosserie selon l'une quelconque des revendications précédentes, dans laquelle la paroi lenticulaire (1) est fabriquée dans un matériau choisi parmi : le polypropylène, le polyéthylène téréphtalate, le polymétacrilate de méthyle, le polycarbonate, le polytéréphtalate d'éthylène, l'acrylonitrile styrène acrylate, l'acrylonitrile butadiène styrène.

**Patentansprüche**

1. Karosserieteil für ein Kraftfahrzeug aufweisend eine Linsenwand (1) aus transparentem, geformtem Kunststoffmaterial mit einem gegebenen Brechungsindex (n) größer als 1 und einer gegebenen Dicke (e), die eine Außenseite und eine der Außenseite gegenüberliegende Innenseite aufweist, in der:

- die Außenseite (10) der Linsenwand (1) ein Netz aus im Wesentlichen kugelförmigen Mikrolinsen (100) mit einem gegebenen Krümmungsradius (R) bildet, die in einem gegebenen Teilungsabstand ($p_1$, $p'_1$) angeordnet sind, und,
- die Innenseite (11) der Linsenwand (1) ein Netz aus dreidimensionalen Mustern (110) trägt, die gemäß des Teilungsabstands des Netzes von Mikrolinsen (100) angeordnet sind, **dadurch gekennzeichnet, dass** das Netz von dreidimensionalen Mustern aus Bruchteilen eines ganzen dreidimensionalen Musters ($FM_{11}$, $FM_{12}$, $FM_{13}$, $FM_{14}$, $FM_{21}$) mit gleichen Abmessungen gebildet wird, zwei benachbarte dreidimensionale Musterbruchteile in der betrachteten Richtung um eine gegebene Phasenverschiebung (d, d') verschoben sind, und wobei jeder dieser dreidimensionalen Musterbruchteile ($FM_{11}$, $FM_{12}$, $FM_{13}$, $FM_{14}$, $FM_{21}$) um einen gegebenen Vergrößerungskoeffizienten (K) vergrößert ist, und auf der Innenseite (11) der Linsenwand (1) in einem Teilungsabstand nebeneinander angeordnet sind, der dem Teilungsabstand ($p_1$,$p'_1$) der Mikrolinsen (100) entspricht.

2. Karosserieteil nach Anspruch 1, wobei eine Länge (L) und eine Breite (l) des Musterbruchteils ($FM_{11}$, $FM_{12}$, $FM_{13}$, $FM_{14}$, $FM_{21}$) jeweils gleich den Teilungsabständen $p_1$ und $p'_1$ der Mikrolinsenanordnung (100) sind.

3. Karosserieteil nach Anspruch 1 oder 2, wobei ein reduzierter Teilungsabstand ($p_{2reduct}$) dem Wert Teilungsabstands (p') der Mikrolinsen abzüglich des Werts des Versatzes (d), multipliziert mit dem Vergrößerungskoeffizienten (K), entspricht ($P_{2reduct} = p_1 - Kd$).

4. Karosserieteil nach einem der vorhergehenden Ansprüche, bei dem die dreidimensionalen Muster (110) Reliefs auf der Innenseite (11) der Linsenwand (1) bilden.

5. Karosserieteil nach einem der vorhergehenden Ansprüche, wobei die Dicke (e) der Linsenwand (1) zwischen 1,5 mm und 5 mm und vorzugsweise zwischen 1,5 mm und 3,5 mm liegt.

6. Karosserieteil nach einem der vorhergehenden Ansprüche, wobei der Radius (R) der Mikrolinsen (100) zwischen 0,5 mm und 3,5 mm liegt.

7. Karosserieteil nach einem der vorhergehenden Ansprüche, wobei der Teilungsabstand ($p_1$, $p'_1$) der Anordnung von Mikrolinsen (100) zwischen 0,5 mm und 3 mm liegt.

8. Karosserieteil nach einem der vorhergehenden Ansprüche, wobei die Mikrolinsen und das Netz aus dreidimensionalen Musterbruchteilen einen Teilungsabstand in Längsrichtung ($p_1$) aufweisen, die sich von dem Teilungsabstand in Querrichtung ($p'_1$) unterscheidet.

9. Karosserieteil nach einem der vorhergehenden Ansprüche, wobei eine Höhe (h) des dreidimensionalen Bildes in Bezug auf die Außenfläche (10) der Linsenwand (1) kleiner oder gleich 15 cm und vorzugsweise kleiner als 10 cm ist.

10. Karosserieteil nach einem der vorhergehenden Ansprüche, bei dem eine Abschirmwand (3) mit einem Brechungsindex (n'), der kleiner ist als der Brechungsindex (n) der Linsenwand (n'<n), auf die Innenseite (11) der Linsenwand (1) aufgeformt ist.

11. Karosserieteil nach einem der vorhergehenden Ansprüche, wobei die Linsenwand (1) eine Außenwand eines geschlossenen optischen Kastens (4) bildet, der eine lichtreflektierende Innenwand (40) aufweist

12. Karosserieteil nach einem der vorhergehenden Ansprüche, wobei die Linsenwand (1) aus einem Material hergestellt ist, das ausgewählt ist aus: Polypropylen, Polyethylenterephthalat, Polymethylmetacrilat, Polycarbonat, Polyethylenterephthalat, Acrylnitril-Styrol-Acrylat, Acrylnitril-Butadien-Styrol.

**Claims**

1. A body part for a motor vehicle, comprising a lenticular wall (1) made of transparent molded plastic having a given refractive index (n) of greater than 1 and a given thickness (e) and comprises an external face and an internal face opposite the external face, wherein:

   - the external face (10) of the lenticular wall (1) forms an array of substantially spherical microlenses (100) having a given radius of curvature (R) and arranged at a given pitch (p1, $p'_1$), and
   - the internal face (11) of the lenticular wall (1), supports an array of three-dimensional patterns (110) arranged according to the pitch of the array of microlenses (100) **characterized in that** said array of three-dimensional patterns is formed of fractions of a whole three-dimensional pattern ($FM_{11}$, $FM_{12}$, $FM_{13}$, $FM_{14}$, $FM_{21}$), of equal dimensions, two fractions of adjacent three-dimensional patterns being offset in the direction considered by a given phase shift (d, d'), and in which each of these fractions of three-dimensional patterns ($FM_{11}$, $FM_{12}$, $FM_{13}$, $FM_{14}$, $FM_{21}$), is enlarged by a given magnification coefficient (K)), and are juxtaposed on the internal face (11) beyond the lenticular wall (1) at a pitch corresponding to the pitch ($p_1$, $p'_1$) of the microlenses (100).

2. The body part according to claim 1, wherein a length (L) and a width (I) of said pattern fraction ($FM_{11}$, $FM_{12}$, $FM_{13}$, $FM_{14}$, $FM_{21}$), are respectively equal to the pitches $p_1$ and $p'_1$ of the array of microlenses (100).

3. The body part according to claim 1 or claim 2, wherein a reduced pitch ($p_{2reduct}$) corresponds to the value of the pitch of the microlenses ($p_1$) minus the value of the offset (d) multiplied by the enlargement coefficient (K) ($p_{2reduct}$=$p_1$-Kd).

4. The body part according to any one of the preceding claims, wherein the three-dimensional patterns (110) form reliefs on the internal face (11) of the lenticular wall (1).

5. The body part according to any one of the preceding claims, wherein the thickness (e) of the lenticular wall (1) is between 1.5 mm and 5 mm and preferably between 1.5 mm and 3.5 mm.

6.  The body part according to any one of the preceding claims, wherein the radius (R) of the microlenses (100) is between 0.5 mm and 3.5 mm.

7.  The body part according to any one of the preceding claims, wherein the pitch ($p_1$, $p'_1$) of the array of microlenses (100) is between 0.5 mm and 3 mm.

8.  The body part according to any one of the preceding claims, wherein the microlenses and the array of fractions of three-dimensional patterns have a longitudinal pitch ($p_1$) that is different from the transverse pitch ($p'_1$)

9.  The body part according to any one of the preceding claims, wherein a height (h) of the three-dimensional image relative to the external face (10) of the lenticular wall (1) is less than or equal to 15 cm and preferably less than 10 cm.

10. The body part according to any one of the preceding claims, wherein a screen wall (3) of a refractive index (n') that is less than the refractive index (n) of the lenticular wall (n'<n), is overmolded on the internal face (11) of the lenticular wall (1).

11. The body part according to any one of the preceding claims, wherein the lenticular wall (1) forms an external wall of a closed optical box (4) comprising a light-reflective inner wall (40)

12. The body part according to any one of the preceding claims, wherein the lenticular wall (1) is made of a material selected from among: polypropylene, polyethylene terephthalate, polymethyl methacrylate, polycarbonate, polyethylene terephthalate, acrylonitrile styrene acrylate, acrylonitrile butadiene styrene.

Fig 1

Fig 3

Fig 2

Fig 4

Fig 5

**Fig 6**

**Fig 7**

O

P

**Fig 8**

100

1

e

Q_O2  Q_P3

Q_P1  Q_O1  Q_P2  Q_O3  Q_P4  Q_O4

110

A'

h

**Fig 9**

S

R

P_1  C

P_2  A

S

R

P_1  C

P_2  A

h

**Fig 10**

A'

**Fig 11**

**Fig 12**

Fig 13

Fig 14

Fig 15

Fig 16

Fig 17

Fig 18

Fig 19

Fig 20

Fig 21

**Fig 22**

**Fig 23**

**Fig 24**

**Fig 23a**

**Fig 24a**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016174917 A

- JP 2010256807 A